# EUROPEAN PATENT APPLICATION

(11) **EP 4 509 335 A1**
(43) Date of publication of application: **19.02.2025**
(21) Application number: 23851614.0
(22) Date of filing: 28.07.2023
(51) Int. Cl.: B60H 1/00, B60H 1/30

(54) **AIR CONDITIONING SYSTEM AND AUTOMOBILE**

(30) Priority: 09.08.2022 CN 202210952206
(71) Applicant: ZHEJIANG ZEEKR INTELLIGENT TECHNOLOGY CO., LTD., 315000 Ningbo Zhejiang (CN); Zhejiang Geely Holding Group Co., Ltd., Hangzhou, Zhejiang 310000 (CN)
(72) Inventor: GAO, Shuai, Ningbo, Zhejiang 315000 (CN); XIA, Songyong, Ningbo, Zhejiang 315000 (CN); TIAN, Jun, Ningbo, Zhejiang 315000 (CN); LIU, Jinsong, Ningbo, Zhejiang 315000 (CN); LIU, Chuang, Ningbo, Zhejiang 315000 (CN); SUN, Ligang, Ningbo, Zhejiang 315000 (CN)
(74) Representative: Osterhoff, Utz
(86) International application number: PCT/CN2023/109955
(87) International publication number: WO 2024/032393

(57) **Abstract**

An air conditioning system, a condenser (11) is provided in the first heat exchange air duct (10), the first air inlet end (12) includes a first air inlet (121) communicated with a circulating air inlet (20) inside the vehicle and a second air inlet (122) communicated with the outside of the vehicle, and the first air outlet end (13) is respectively communicated with a first air outlet (131) communicated with the inside of the vehicle and a second air outlet (132) communicated with the outside of the vehicle. An evaporator (31) is provided in the second heat exchange air duct (30), the second air inlet end (32) includes a third air inlet (321) communicated with the circulating air inlet inside the vehicle and a fourth air inlet (322) communicated with the outside of the vehicle, and the second air outlet end (33) is respectively communicated with a third air outlet (331) communicated with the inside of the vehicle and a fourth air outlet (332) communicated with the outside of the vehicle. The first circulating air duct (40) is configured to recover the gas after heat exchange via the first heat exchange air duct and transmit the gas to the first air inlet and/or the third air inlet. The second circulating air duct (50) is configured to recover the gas after heat exchange through the second heat exchange air duct and transmit the gas to the first air inlet and/or the third air inlet. Additionally, the vehicle is provided the above air conditioning system. The air conditioning system improves the rate of heating or cooling, reducing the time required for the vehicle's interior temperature to reach a comfortable level, thereby enhancing the user's driving experience.

## Description

This application claims priority to Chinese Patent Application No. 202210952206.9, filed on August 9, 2022, the entire contents of which are incorporated herein by reference.

### TECHNICAL FIELD

The present application relates to the technical field of air conditioning, and in particular to an air conditioning system and a vehicle employing the air conditioning system.

### BACKGROUND

The automotive air conditioning system generally operates in three modes: cooling, heating, and ventilation. During operation, fresh air needs to be introduced from the outside. In cold winter conditions, the outdoor ambient temperature is very low, resulting in the air conditioning system drawing in fresh air at a similarly low temperature. This leads to excessively low suction temperature and pressure for the compressor, making it difficult for the air conditioning system to quickly reach its operating state, and the heating rate is slow. In hot summer conditions, the outdoor ambient temperature is very high, so the fresh air drawn in by the air conditioning system also has a high temperature. This causes the temperature and pressure at the expansion valve inlet to be too high, making it difficult for the air conditioning system to quickly reach its operating state, and the cooling rate is slow. Consequently, passengers are exposed to extreme cold or heat for extended periods, negatively impacting their ride experience.

### SUMMARY

The main objective of the present application is to provide an air conditioning system, which aims to increase the heating or cooling rate of the air conditioning system.

In order to achieve the above objective, the present application provides an air conditioning system, including: a first heat exchange air duct, a first heat exchange air duct, a second heat exchange air duct, and a circulation system.

In an embodiment, a condenser is provided in the first heat exchange air duct, the first heat exchange air duct is provided with a first air inlet end and a first air outlet end, the first air inlet end includes a first air inlet communicated with an circulating air inlet in a vehicle and a second air inlet communicated with an outside of the vehicle, and the first air outlet end is respectively communicated with a first air outlet communicated with an inside of the vehicle and a second air outlet communicated with an outside of the vehicle.

In an embodiment, an evaporator is provided in the second heat exchange air duct, the second heat exchange air duct is provided with a second air inlet end and a second air outlet end, the second air inlet end includes a third air inlet communicated with the circulating air inlet in the vehicle and a fourth air inlet communicated with the outside of the vehicle, and the second air outlet end is respectively communicated with a third air outlet communicated with the inside of the vehicle and a fourth air outlet communicated with the outside of the vehicle.

In an embodiment, the circulation system includes a first circulating air duct communicated with the first heat exchange air duct. The first circulating air duct is configured to recover air after heat exchange through the first heat exchange air duct and circulate the air to the first air inlet and/or the third air inlet.

In an embodiment, the circulation system includes a second circulating air duct communicated with the second heat exchange air duct. The second circulating air duct is configured to recover air after heat exchange through the second heat exchange air duct and circulate the air to the first air inlet and/or the third air inlet.

In an embodiment, the air conditioning system is provided with a heating mode including a first heating state, and when the air conditioning system is in the first heating state: the first air inlet, the second air inlet, the third air inlet, the fourth air outlet, and the first circulating air duct are all communicated, the circulating air inlet, the first air outlet, the second air outlet, the third air outlet, the fourth air inlet, and the second circulating air duct are all blocked; and air from outside the vehicle is directed into the first heat exchange air duct for heat exchange, flows through the first circulating air duct, and is partly directed into the first air inlet for continued circulation, partly directed into the second heat exchange air duct through the third air inlet for heat exchange and is discharged outside the vehicle.

In an embodiment, the air conditioning system is provided with the heating mode including the first heating state, and when the air conditioning system is in the first heating state: the second air inlet, the third air inlet, the fourth air outlet, and the first circulating air duct are all communicated, the circulating air inlet, the first air inlet, the first air outlet, the second air outlet, the third air outlet, the fourth air inlet, and the second circulating air duct are all blocked; and air from outside the vehicle is directed into the first heat exchange air duct for heat exchange, flows through the first circulating air duct, and is directed into the third air inlet, flows into the second heat exchange air duct for heat exchange, and is discharged outside the vehicle.

**In** an embodiment, the heating mode further includes a second heating state, the first heating state is switchable to the second heating state, and when the air conditioning system is in the second heating state: the circulating air inlet, the first air inlet, the second air inlet, the fourth air inlet, the first air outlet, and the fourth air outlet are all communicated, the third air inlet, the second air outlet, the third air outlet, the first circulating air duct, and the second circulating air duct are all blocked; and air after heat exchange through the first heat exchange air duct is discharged into the vehicle and recirculates into the first heat exchange air duct together with air from inside the vehicle.

**In** an embodiment, the air conditioning system is provided with a cooling mode, the cooling mode includes a first cooling state, in the first cooling state: the first air inlet, the fourth air inlet, the second air outlet, and the second circulating air duct are all communicated, the circulating air inlet, the second air inlet, the third air inlet, the first air outlet, the third air outlet, the fourth air outlet, and the first circulating air duct are all blocked; and air from outside the vehicle is directed into the second heat exchange air duct for heat exchange, flows from the second circulating air duct into the first heat exchange air duct for heat exchange, and is discharged outside the vehicle.

**In** an embodiment, the cooling mode further includes a second cooling state, the first cooling state is switchable to the second cooling state, and when the air conditioning system is in the second cooling state: the circulating air inlet, the first air inlet, the second air inlet, the third air inlet, the second air outlet, and the third air outlet are all communicated, the fourth air inlet, the first air outlet, the fourth air outlet, the first circulating air duct, and the second circulating air duct are all blocked; and air after heat exchange through the second heat exchange air duct is discharged into the vehicle, flows through the circulating air inlet, is partly directed into the third air inlet for continued circulation, partly flows through the first air inlet for heat exchange in the first heat exchange air duct and is discharged outside the vehicle.

In an embodiment, the cooling mode further includes a second cooling state, the first cooling state is switchable to the second cooling state, and when the air conditioning system is in the second cooling state: the circulating air inlet, the second air inlet, the third air inlet, the second air outlet, and the third air outlet are all communicated, the first air inlet, the fourth air inlet, the first air outlet, the fourth air outlet, the first circulating air duct, and the second circulating air duct are all blocked; and air after heat exchange through the second heat exchange air duct is discharged into the vehicle, flows through the circulating air inlet, and is directed into the third air inlet for continued circulation.

In an embodiment, a first control valve is provided between the third air inlet and the first air inlet, and is configured to control an opening and closing of the third air inlet, the first control valve is provided with a first switch position, a second switch position, and a third switch position, switchable between each other; when the first control valve is at the first switch position, the first air inlet is open and the third air inlet is closed; when the first control valve is at the second switch position, the third air inlet is open and the first air inlet is closed; and when the first control valve is at the third switch position, both the third air inlet and the first air inlet are open, and the first control valve is configured to control an air intake ratio between the third air inlet and the first air inlet.

In an embodiment, the first circulating air duct is provided with a third air inlet end and a third air outlet end, the third air inlet end is directly connected to the first heat exchange air duct and located before the first air outlet and the second air outlet, and the third air outlet end is communicated with the first air inlet and/or the third air inlet; and/or
the second circulating air duct is provided with a fourth air inlet and a fourth air outlet, the fourth air inlet is directly connected to the second heat exchange air duct and located before the third air outlet or the fourth air outlet, and the fourth air outlet is communicated with the first air inlet and/or the third air inlet.

In an embodiment, the first circulating air duct, the first air outlet, and the second air outlet are all provided with first control switches, each of the first control switches is respectively configured to control an opening and closing state, air intake volume and speed of the first circulating air duct, the first air outlet, and the second air outlet; and/or
the second circulating air duct, the third air outlet, and the fourth air outlet are all provided with second control switches, each of the second control switches is respectively configured to control an opening and closing state, air intake volume and speed of the second circulating air duct, the third air outlet, and the fourth air outlet.

In an embodiment, the air conditioning system further includes: a first branch channel and a second branch channel communicated with the first air outlet end, the first branch channel is communicated with the first air outlet and the second branch channel is communicated with the second air outlet; the first circulating air duct is provided with a third air inlet end and a third air outlet end, the third air inlet end is communicated with the second branch channel, and the third air outlet end is communicated with the first air inlet and/or the third air inlet; and/or
a third branch channel and a fourth branch channel communicated with the second air outlet end, the third branch channel is communicated with the third air outlet and the fourth branch channel is communicated with the fourth air outlet, and the second circulating air duct is provided with a fourth air inlet end and a fourth air outlet end, the fourth air inlet end is communicated with the fourth branch channel, and the fourth air outlet end is communicated with the first air inlet and/or the third air inlet.

In an embodiment, a second switch valve group is provided at a first branch channel and a second branch channel, the second switch valve group includes a third switch valve provided at the first branch channel and a fourth switch valve provided at the second branch channel, and the second switch valve group is configured to control an air intake ratio between the first branch channel and the second branch channel.

In an embodiment, a second control valve is provided at a connection between the first branch channel and the second branch channel, the second control valve is provided with a fourth switch position and a fifth switch position switchable between each other, and the second control valve is configured to control the air intake ratio between the first branch channel and the second branch channel; and when the second control valve is in the fourth switch position, the second branch channel is communicated and the first branch channel is blocked, and when the second control valve is in the fifth switch position, the first branch channel is communicated and the second branch channel is blocked.

In an embodiment, a third switch valve group is provided at a third branch channel and a fourth branch channel, the third switch valve group includes a fifth switch valve provided at the fourth branch channel and a sixth switch valve provided at the third branch channel, and the third switch valve group is configured to control an air intake ratio between the third branch channel and the fourth branch channel.

In an embodiment, a third control valve is provided at a connection between the third branch channel and the fourth branch channel, the third control valve is provided with a sixth switch position and a seventh switch position switchable between each other, and the third control valve is configured to control the air intake ratio between the third branch channel and the fourth branch channel; and when the third control valve is in the seventh switch position, the fourth branch channel is communicated and the third branch channel is blocked, and when the third control valve is in the sixth switch position, the third branch channel is communicated and the fourth branch channel is blocked.

In an embodiment, a fifth switch valve group is provided at a fourth air inlet end and the fourth branch channel, the fifth switch valve group includes a ninth switch valve provided at the fourth branch channel and a tenth switch valve provided at the fourth air inlet end, and the fifth switch valve group is configured to control an air intake ratio between the fourth air inlet and the fourth branch channel.

In an embodiment, a fifth control valve is provided at a connection between the fourth air inlet end and the fourth branch channel, the fifth control valve is provided with a tenth switch position and an eleventh switch position switchable between each other, and the fifth control valve is configured to control the air intake ratio between the fourth air inlet and the fourth branch channel; and when the fifth control valve is in the tenth switch position, the second circulating air duct is communicated and the fourth branch channel is blocked, and when the fifth control valve is in the eleventh switch position, the fourth branch channel is communicated and the second circulating air duct is blocked.

In an embodiment, the first heat exchange air duct and the second heat exchange air duct are provided adjacent to or spaced apart from each other, a first wind wheel is provided in the first heat exchange air duct, and a second wind wheel is provided in the second heat exchange air duct, and the air conditioning system further includes at least one drive motor, the drive motor drives the first wind wheel and the second wind wheel.

The present application further provides a vehicle, including: a vehicle body and the above mentioned air conditioning system, and the air conditioning system is provided at the vehicle body.

In the technical solution of the present application, a first heat exchange air duct and a second heat exchange air duct are provided. The first heat exchange air duct is built with a condenser. The first heat exchange air duct has a first air inlet end and a first air outlet end. The first air inlet end includes a first air inlet communicated with the circulating air inlet in the vehicle and a second air inlet communicated with the outside of the vehicle. The first air outlet end is respectively communicated with the first air outlet in the vehicle and the second air outlet communicated with the outside of the vehicle. The second heat exchange air duct is built with an evaporator. The second heat exchange air duct has a second air inlet end and a second air outlet end. The second air inlet end includes a third air inlet communicated with the circulating air inlet and a fourth air inlet communicated with the outside of the vehicle. The second air outlet end is respectively communicated with the third air outlet in the vehicle and the fourth air outlet communicated with the outside of the vehicle. By controlling the opening and blocking of the first air inlet, the second air inlet, the third air inlet, the fourth air inlet, the first air outlet, the second air outlet, the third air outlet, the fourth air outlet and the circulating air inlet. The normal operation of the air conditioning system in the heating mode and the cooling mode is realized, and the mutual switching between the two. Ensure the normal operation of the air conditioning system.

However, in the actual working process, especially in extremely cold or hot seasons, the work of the evaporator and condenser in the air conditioning system is often affected, reducing the working efficiency of both. This makes it difficult for the air conditioning system to quickly enter the working state, resulting in a slow cooling or heating rate. It takes longer for the temperature in the vehicle to reach a comfortable level, prolonging the waiting time of passengers and affecting the user's riding experience. Therefore, a circulation system is provided to recover the air passing through the first heat exchange air duct or the second heat exchange air duct, thereby increasing the evaporator inlet temperature or reducing the condenser inlet temperature within a short time after the air conditioning system starts, promoting the air conditioning system to quickly enter the working state.

The circulation system includes a first circulating air duct and a second circulating air duct. The first circulating air duct is communicated with the first heat exchange air duct and is used to recover the air after heat exchange through the first heat exchange air duct, circulating it to the first air inlet and/or the third air inlet. The second circulating air duct is communicated with the second heat exchange air duct and is used to recover the air after heat exchange through the second heat exchange air duct, circulating it to the first air inlet and/or the third air inlet. By controlling the opening and closing of the first circulating air duct and the second circulating air duct respectively, and correspondingly adjusting the opening and closing of the first air inlet, the second air inlet, the third air inlet, the fourth air inlet, the first air outlet, the second air outlet, the third air outlet, the fourth air outlet, and the circulating air inlet, the system can recover the air heated by the condenser to the second heat exchange air duct. This increases the temperature of the air entering the second heat exchange air duct, assisting the evaporator in exchanging heat and promoting the air conditioning air to quickly enter the working state. In an embodiment, it can recover the air cooled by the evaporator to the first heat exchange air duct, reducing the temperature of the air entering the first heat exchange air duct, thus assisting the condenser in exchanging heat. This promotes the air conditioning air to quickly enter the working state, reduces the time required for the temperature in the vehicle to reach a comfortable level, shortens the passengers' waiting time, and improves the user's riding experience.

### BRIEF DESCRIPTION OF THE DRAWINGS

In order to more clearly illustrate the technical solutions in the embodiments of the present application or in the related art, drawings used in the embodiments or in the related art will be briefly described below. Obviously, the drawings in the following description are only some embodiments of the present application. It will be apparent to those skilled in the art that other figures can be obtained according to the structures shown in the drawings without creative work.
FIG. 1 is a schematic structural view of an air conditioning system in a first heating state in a heating mode according to an embodiment of the present application.
FIG. 2 is a schematic structural view of the air conditioning system in FIG. 1 in a second heating state in the heating mode.
FIG. 3 is a schematic structural view of the air conditioning system in FIG. 1 in a first cooling state in a cooling mode.
FIG. 4 is a schematic structural view of the air conditioning system in FIG. 1 in a second cooling state in the cooling mode.
FIG. 5 is a schematic structural view of a first heating state of an air conditioning system in a heating mode according to another embodiment of the present application.
FIG. 6 is a schematic structural view of the air conditioning system in FIG. 5 in a second heating state in the heating mode.
FIG. 7 is a schematic structural view of the air conditioning system in FIG. 5 in a first cooling state in a cooling mode.
FIG. 8 is a schematic structural view of the air conditioning system in FIG. 5 in a second cooling state in the cooling mode.
FIG. 9 is a schematic structural view of a first heating state of an air conditioning system in a heating mode according to another embodiment of the present application.

**Description of reference signs:**

| Reference sign | Name | Reference sign | Name |
|---|---|---|---|
| 10 | first heat exchange air duct | 35 | third control valve |
| 11 | condenser | 351 | sixth switch position |
| 12 | first air inlet end | 352 | seventh switch position |
| 121 | first air inlet | 36 | second wind wheel |
| 122 | second air inlet | 40 | first circulating air duct |
| 13 | first air outlet end | 401 | third air inlet end |
| 131 | first air outlet | 402 | third outlet end |
| 132 | second air outlet | 41 | fourth switch valve group |
| 133 | first branch channel | 411 | seventh switch valve |
| 134 | second branch channel | 412 | eighth switch valve |
| 14 | second switch valve group | 42 | fourth control valve |
| 141 | third switch valve | 421 | eighth switch position |
| 142 | fourth switch valve | 422 | ninth switch position |
| 15 | second control valve | 50 | second circulating air duct |
| 151 | fourth switch position | 501 | fourth air inlet end |
| 152 | fifth switch position | 502 | fourth air outlet end |
| 16 | first wind wheel | 51 | fifth switch valve group |
| 20 | circulating air inlet | 511 | ninth switch valve |
| 30 | second heat exchange air duct | 512 | tenth switch valve |
| 31 | evaporator | 52 | fifth control valve |
| 32 | second air inlet | 521 | tenth switch position |
| 321 | third air inlet | 522 | eleventh switch position |
| 322 | fourth air inlet | 60 | first control valve |
| 33 | second air outlet | 601 | first switch position |
| 331 | third air outlet | 602 | second switch position |
| 332 | fourth air outlet | 603 | third switch position |
| 333 | third branch channel | 61 | first switch valve group |
| 334 | fourth branch channel | 611 | first switch valve |
| 34 | third switch valve group | 612 | second switch valve |
| 341 | fifth switch valve | 62 | first control switch |
| 342 | sixth switch valve | 621 | second control switch |

The realization of the purpose, functional features and advantages of the present application will be further described with reference to the embodiments and the accompanying drawings.

### DETAILED DESCRIPTION OF THE EMBODIMENTS

The technical solutions in the embodiments of the present application will be clearly and completely described below with reference to the drawings in the embodiment of the present application. Obviously, the described embodiments are only a part of the embodiments of the present application, not all of the embodiments. Based on the embodiments in the present application, all other embodiments perceived by those ordinary skills in the art without creative effort should be fallen within the protection scope of the present application.

It should be noted that all of the directional instructions in the embodiments of the present application (such as, up, down, left, right, front, rear.....) are only used to explain the relative position relationship and movement of each component under a specific attitude (as shown in the drawings), if the specific attitude changes, the directional instructions will change correspondingly.

In addition, the descriptions in the present application that refer to "first," "second," etc. are only for descriptive purposes and are not to be interpreted as indicating or implying relative importance or to implicitly indicate the number of technical features indicated. Thus, a feature defined as "first" or "second" may explicitly or implicitly include at least one of the feature. In addition, technical solutions between the embodiments can be combined with each other, but must be based on the realization of the technical solutions by those skilled in the art, and when the technical solutions are contradictory to each other or cannot be realized, the technical solutions should be considered that the combination does not exist, and the technical solutions are not fallen within the protection scope claimed in the present application.

The present application provides an air conditioning system.

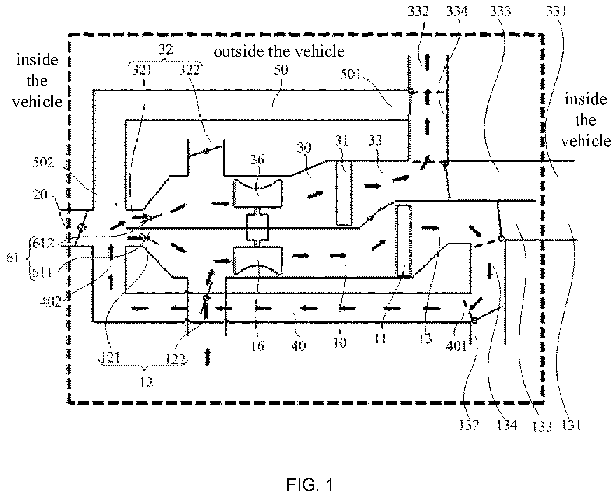

In the embodiment of the present application, as shown in FIG. 1 to FIG. 9, the air conditioning system includes a first heat exchange air duct 10, a second heat exchange air duct 30, and a circulation system. A condenser 11 is provided in the first heat exchange air duct 10. The first heat exchange air duct 10 is provided with a first air inlet end 12 and a first air outlet end 13. The first air inlet end 12 includes a first air inlet 121, communicated with the circulating air inlet 20 in the vehicle, and a second air inlet 122, communicated with the outside of the vehicle. The first air outlet end 13 is respectively communicated with the first air outlet 131 communicated with the inside of the vehicle, and the second air outlet 132 communicated with the outside of the vehicle. An evaporator 31 is provided in the second heat exchange air duct 30. The second heat exchange air duct 30 is provided with a second air inlet end 32 and a second air outlet end 33. The second air inlet end 32 includes a third air inlet 321, communicated with the circulating air inlet 20, and a fourth air inlet 322, communicated with the outside of the vehicle. The second air outlet end 33 is respectively communicated with the third air outlet 331 inside the vehicle and the fourth air outlet 332 outside the vehicle. The circulation system includes a first circulating air duct 40 and a second circulating air duct 50. The first circulating air duct 40 is communicated with the first heat exchange air duct 10, it is used to recover the air after heat exchange through the first heat exchange air duct 10 and circulate it to the first air inlet 121 and/or the third air inlet 321. The second circulating air duct 50 is communicated with the second heat exchange air duct 30, it is used to recover the air after heat exchange through the second heat exchange air duct 30 and circulate it to the first air inlet 121 and/or the third air inlet 321.

In an embodiment, the air conditioning system is applied to a vehicle. A circulating air inlet 20 is opened at the vehicle body. The circulating air inlet 20 is communicated with the first air inlet 121 and the third air inlet 321. A condenser 11 is provided in the first heat exchange air duct 10. The condenser 11 heats the air in the first heat exchange air duct 10; therefore, in the heating mode, the condenser 11 serves as an in-vehicle unit. Fresh air is formed after the external air passes through the vehicle air filtration system. It enters the first heat exchange air duct 10 through the second air inlet 122. The air heated by the first heat exchange air duct 10 passes through the first air outlet 13 and is discharged into the vehicle through the first air outlet 131, heating the vehicle; and the evaporator 31 serves as an out-vehicle unit. Fresh air is formed after the external air passes through the vehicle air filtration system. It enters the second heat exchange air duct 30 through the fourth air inlet 322. The air cooled by the second heat exchange air duct 30 passes through the second air outlet 33 and is discharged out of the vehicle through the fourth air outlet 332. In this way, the air flow direction in the heating mode is completed, and the temperature in the vehicle is increased.

It should be noted that the "communication" indicated in the present application only represents the connection relationship between different ventilation ducts. It does not represent its communication state. Whether it is specifically communicated or whether each duct is blocked is controlled by its corresponding control switch. For example, the first air outlet 13 is respectively communicated with the first air outlet 131 in the vehicle and the second air outlet 132 outside the vehicle. The first air outlet 13 can be communicated only with the first air outlet 131, or it can be communicated only with the second air outlet 132, or the first air outlet 131 and the second air outlet 132 are communicated at the same time. The first air outlet 13 described in this embodiment represents a section of the duct from the position of the condenser 11 to the first air outlet 131 and the second air outlet 132. The meaning of the first air outlet 13 being communicated with the first air outlet 131 and the second air outlet 132, respectively, can be: the first air outlet 13 is directly connected to the first air outlet 131 and the second air outlet 132. That is, the first air outlet 131 and the second air outlet 132 are directly opened at the end of the first air outlet 13 away from the condenser 11; or the first air outlet 13 is indirectly connected to the first air outlet 131 and the second air outlet 132. For example, the first air outlet 13 is respectively communicated with the first air outlet 131 and the second air outlet 132 through a preset air duct.

In an embodiment, the second heat exchange air duct 30 contains an evaporator 31. The evaporator 31 cools the air in the second heat exchange air duct 30; therefore, in the cooling mode, the evaporator 31 serves as an in-vehicle unit. Fresh air is formed after the external air passes through the automobile air filtration system. It enters the second heat exchange air duct 30 through the fourth air inlet 322. The air cooled by the second heat exchange air duct 30 passes through the second air outlet 33 and is discharged into the vehicle through the third air outlet 331, cooling the interior of the vehicle, and the condenser 11 serves as an outdoor unit. Fresh air is formed after the external air passes through the automobile air filtration system. It enters the first heat exchange air duct 10 through the second air inlet 122. The air heated by the second heat exchange air duct 30 is discharged outside the vehicle through the second air outlet 132 on the first air outlet 13. In this way, the air flow in the cooling mode is completed, cooling the interior of the vehicle. The second air outlet 33 described in this embodiment refers to a section of the duct from the location of the evaporator 31 to the third air outlet 331 and the fourth air outlet 332. The second air outlet 33 is communicated with the third air outlet 331 and the fourth air outlet 332, respectively, which means that the second air outlet 33 is directly connected to the third air outlet 331 and the fourth air outlet 332, that is, the third air outlet 331 and the fourth air outlet 332 are directly opened at the second air outlet 33, or the second air outlet 33 is indirectly connected to the third air outlet 331 and the fourth air outlet 332. For example, the second air outlet 33 is communicated with the third air outlet 331 and the fourth air outlet 332, respectively, through a preset duct.

However, in the actual working process, especially in extremely cold or hot seasons, such as cold winter, the outdoor ambient temperature is very low. Therefore, the temperature of the fresh air inhaled from the outside by the first heat exchange air duct 10 is also very low. This may cause the compressor suction temperature and suction pressure to be too low, which is not conducive to the heat exchange of the condenser 11, making it difficult for the air conditioning system to quickly enter the working state, and the heating rate slows down. In hot summer, the outdoor ambient temperature is very high; therefore, the temperature of the fresh air inhaled from the outside by the air conditioning system is also very high. The inlet temperature and inlet pressure of the expansion valve are too high, which is not conducive to the heat exchange of the evaporator 31. It is difficult for the air conditioning system to quickly enter the working state, the cooling rate is slow, and it takes longer for the temperature in the vehicle to become comfortable. The waiting time of passengers is extended, which affects the user's riding experience. Therefore, a circulation system is provided to recover the air through the first heat exchange air duct 10 or the second heat exchange air duct 30. Thus, within a period of time after the air conditioning system is just started, the inlet air temperature of the evaporator 31 is increased or the inlet air temperature of the condenser 11 is reduced, thereby promoting the air conditioning system to quickly enter the working state.

The circulation system includes a first circulating air duct 40 and a second circulating air duct 50. The circulating air inlet 20 is communicated with the first air inlet 121 and the third air inlet 321 through a connecting channel. The third air outlet end 402 of the first circulating air duct 40 and the fourth air outlet end 502 of the second circulating air duct 50 are both communicated with the connecting channel. Thus, the air heated by the condenser 11 is recovered in the second heat exchange air duct 30, increasing the temperature of the air entering the second heat exchange air duct 30, thereby assisting the evaporator 31 in heat exchange and promoting the air conditioning system to quickly enter the working state. In an embodiment, the air cooled by the evaporator 31 is recovered in the first heat exchange air duct 10, reducing the temperature of the air entering the first heat exchange air duct 10, thereby assisting the condenser 11 in heat exchange and promoting the air conditioning system to quickly enter the working state. By controlling the opening and closing of the first circulating air duct 40 and the opening and closing of the second circulating air duct 50, it adapts to the switching of different working modes or states of the air conditioning system. Moreover, the communication and blocking of the first air inlet 121, the second air inlet 122, the third air inlet 321, the fourth air inlet 322, the first air outlet 131, the second air outlet 132, the third air outlet 331, the fourth air outlet 332, and the circulating air inlet 20 can be adjusted accordingly based on the switching of different working modes or states of the air conditioning system.

In the technical solution of the present application, a first heat exchange air duct 10 and a second heat exchange air duct 30 are provided. A condenser 11 is provided in the first heat exchange air duct 10. The first heat exchange air duct 10 is provided with a first air inlet end 12 and a first air outlet end 13. The first air inlet end 12 includes a first air inlet 121, communicated with the circulating air inlet 20 in the vehicle, and a second air inlet 122, communicated with the outside of the vehicle. The first air outlet end 13 is respectively communicated with the first air outlet 131 communicated with the inside of the vehicle, and the second air outlet 132 communicated with the outside of the vehicle. An evaporator 31 is provided in the second heat exchange air duct 30. The second heat exchange air duct 30 is provided with a second air inlet end 32 and a second air outlet end 33.

The second air inlet end 32 includes a third air inlet 321, communicated with the circulating air inlet 20, and a fourth air inlet 322, communicated with the outside of the vehicle. The second air outlet end 33 is respectively communicated with the third air outlet 331 inside the vehicle and the fourth air outlet 332 outside the vehicle. By controlling the opening and blocking of the first air inlet 121, the second air inlet 122, the third air inlet 321, the fourth air inlet 322, the first air outlet 131, the second air outlet 132, the third air outlet 331, the fourth air outlet 332, and the circulating air inlet 20, the normal operation of the air conditioning system in the heating mode and the cooling mode, as well as the switching between the two, is achieved, ensuring the normal operation of the air conditioning system.

However, in the actual working process, especially in extremely cold or hot seasons, the operation of the evaporator 31 and the condenser 11 in the air conditioning system is often affected, reducing the working efficiency of both. This makes it difficult for the air conditioning system to quickly enter the working state, resulting in a slow cooling or heating rate. It takes longer for the temperature in the vehicle to become comfortable, prolonging the waiting time of passengers and affecting the user's riding experience. Therefore, a circulation system is provided to recover the air passing through the first heat exchange air duct 10 or the second heat exchange air duct 30. Within a period of time after the air conditioning system is just started, the air inlet temperature of the evaporator 31 is increased, or the air inlet temperature of the condenser 11 is reduced, thereby promoting the air conditioning system to quickly enter the working state. The circulation system includes a first circulating air duct 40 and a second circulating air duct 50. The first circulating air duct 40 is communicated with the first heat exchange air duct 10, and is used to recover the air after heat exchange through the first heat exchange air duct 10 and circulate it to the first air inlet 121 and/or the third air inlet 321. The second circulating air duct 50 is communicated with the second heat exchange air duct 30, used to recover the air after heat exchange through the second heat exchange air duct 30 and circulate it to the first air inlet 121 and/or the third air inlet 321. By controlling the opening and closing of the first circulating air duct 40 and the second circulating air duct 50, and correspondingly adjusting the opening and blocking of the first air inlet 121, the second air inlet 122, the third air inlet 321, the fourth air inlet 322, the first air outlet 131, the second air outlet 132, the third air outlet 331, the fourth air outlet 332, and the circulating air inlet 20, the air heated by the condenser 11 is recovered in the second heat exchange air duct 30, raising the temperature of the air entering the second heat exchange air duct 30, assisting the evaporator 31 in heat exchange, and promoting the air conditioning system to quickly enter the working state. In an embodiment, the air cooled by the evaporator 31 is recovered in the first heat exchange air duct 10, lowering the temperature of the air entering the first heat exchange air duct 10, thereby assisting the condenser 11 in heat exchange and promoting the air conditioning system to quickly enter the working state. This reduces the time required for the vehicle's interior temperature to reach a comfortable level, shortens passengers' waiting time, and improves the user's riding experience.

As shown in FIG. 1, FIG. 5, and FIG. 9, in an embodiment, the air conditioning system is provided with a heating mode. The heating mode is provided with a first heating state. When the air conditioning system is in the first heating state, the first air inlet 121, the second air inlet 122, the third air inlet 321, the fourth air outlet 332, and the first circulating air duct 40 are all communicated. The circulating air inlet 20, the first air outlet 131, the second air outlet 132, the third air outlet 331, the fourth air inlet 322, and the second circulating air duct 50 are all blocked. The air outside the vehicle enters the first heat exchange air duct 10 for heat exchange and passes through the first circulating air duct 40. After that, part of the air enters the first air inlet 121 to continue circulating, while the other part flows into the second heat exchange air duct 30 through the third air inlet 321 for heat exchange and is discharged outside the vehicle. In an embodiment, the fresh air outside the vehicle enters the first heat exchange air duct 10 from the second air inlet 122 and is heated by the condenser 11. It enters the first circulating air duct 40 from the third air inlet end 401. The third air outlet end 402 of the first circulating air duct 40 is communicated with both the first air inlet 121 and the third air inlet 321. A part of the air enters from the first air inlet 121, and after being neutralized with the fresh air entering from the second air inlet 122, it flows into the first heat exchange air duct 10 together, thereby neutralizing and increasing the inlet temperature of the fresh air, then increasing the inlet temperature of the first heat exchange air duct 10, reducing heat waste, and reducing the power required for the condenser 11 to work. The other part flows into the second heat exchange air duct 30 from the third air inlet 321 for heat exchange, thereby increasing the inlet temperature of the second heat exchange air duct 30. The evaporator 31 recovers waste heat, increasing the suction temperature and suction pressure of the compressor, assisting the evaporator 31 in heat exchange, and helping the air conditioning system to quickly enter the working state.

In an embodiment, the air conditioning system is provided with a heating mode. The heating mode is provided with a first heating state. When the air conditioning system is in the first heating state, the second air inlet 122, the third air inlet 321, the fourth air outlet 332, and the first circulating air duct 40 are all communicated. The circulating air inlet 20, the first air inlet 121, the first air outlet 131, the second air outlet 132, the third air outlet 331, the fourth air inlet 322, and the second circulating air duct 50 are all blocked. The air outside the vehicle enters the first heat exchange air duct 10 for heat exchange and passes through the first circulating air duct 40. After that, the air enters the third air inlet 321 and flows into the second heat exchange air duct 30 for heat exchange and is discharged outside the vehicle. That is, the first air inlet 121 is blocked. At this time, the third air outlet end 402 of the first circulating air duct 40 is only communicated with the third air inlet 321. The air heated by the condenser 11 in the first heat exchange air duct 10 all flows into the second heat exchange air duct 30 through the third air inlet 321 to assist the evaporator 31 in heat exchange.

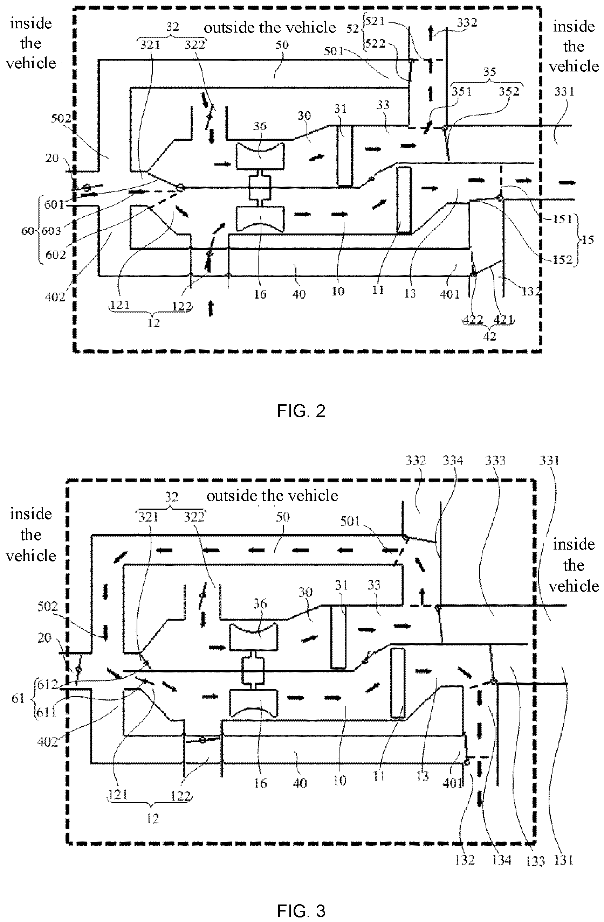

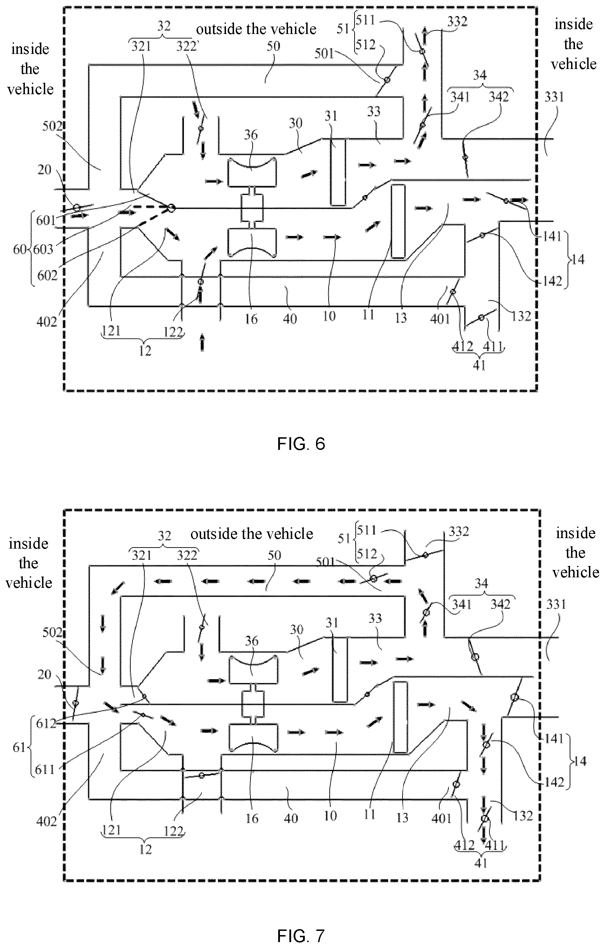

As shown in FIG. 2 and FIG. 6, in an embodiment, the heating mode is also provided with a second heating state. The first heating state can be switched to the second heating state. In the second heating state, the circulating air inlet 20, the first air inlet 121, the second air inlet 122, the fourth air inlet 322, the first air outlet 131, and the fourth air outlet 332 are all communicated. The third air inlet 321, the second air outlet 132, the third air outlet 331, the first circulating air duct 40, and the second circulating air duct 50 are all blocked. After the air exchanges heat in the first heat exchange air duct 10 and is discharged into the vehicle, it is recirculated to the first heat exchange air duct 10 together with the air inside the vehicle. In an embodiment, after the air conditioning system has been working for a period of time, the evaporator 31 enters the normal working state. The circulating air inlet 20, the fourth air inlet 322, the first air outlet 131 are adjusted to open, the third air inlet 321 and the second air outlet 132 are closed, and the first circulating air duct 40 is blocked. The first heating state is then switched to the second heating state, allowing fresh air from outside the vehicle to enter the first heat exchange air duct 10 through the second air inlet 122. The air heated by the condenser 11 flows into the vehicle from the first air outlet 131. After the temperature inside the vehicle rises, it flows into the first air inlet 121 again from the circulating air inlet 20. The air is mixed with the fresh air entering from the second air inlet 122 and flows into the first heat exchange air duct 10 together. This raises the inlet temperature of the fresh air, increases the inlet temperature of the first heat exchange air duct 10, reduces heat waste, and decreases the power required for the condenser 11 to work. Additionally, fresh air from outside the vehicle enters the second heat exchange air duct 30 from the fourth air inlet 322. The evaporator 31 works normally to exchange heat, and then the air is discharged from the fourth air outlet 332.

As shown in FIG. 3 and FIG. 7, in an embodiment, the air conditioning system is also provided with a cooling mode. The cooling mode is provided with a first cooling state. When the air conditioning system is in the first cooling state, the first air inlet 121, the fourth air inlet 322, the second air outlet 132, and the second circulating air duct 50 are all communicated. The circulating air inlet 20, the second air inlet 122, the third air inlet 321, the first air outlet 131, the third air outlet 331, the fourth air outlet 332, and the first circulating air duct 40 are all blocked. The air outside the vehicle enters the second heat exchange air duct 30 for heat exchange. The air flows from the second circulating air duct 50 into the first heat exchange air duct 10 for heat exchange and is discharged outside the vehicle. In an embodiment, the fresh air outside the vehicle enters the second heat exchange air duct 30 from the fourth air inlet 322. After being cooled by the evaporator 31, it enters the second circulating air duct 50 from the fourth air inlet end 501. The second circulating air duct 50 is communicated with the first air inlet 121. The air flows into the first heat exchange air duct 10 from the first air inlet 121, reducing the air inlet temperature of the first heat exchange air duct 10, and thus lowering the inlet temperature and inlet pressure of the expansion valve. This assists the condenser 11 in heat exchange and helps the air conditioning system to quickly enter the working state.

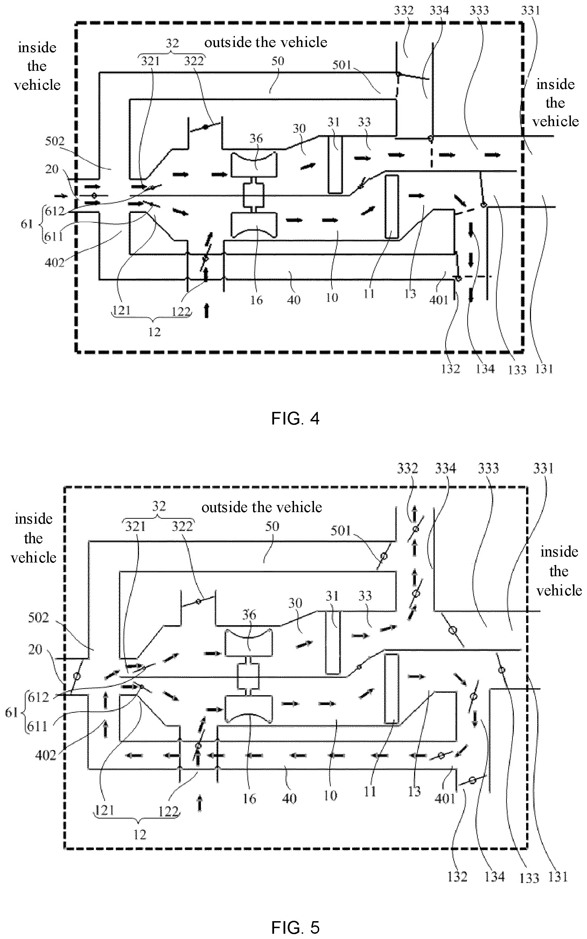

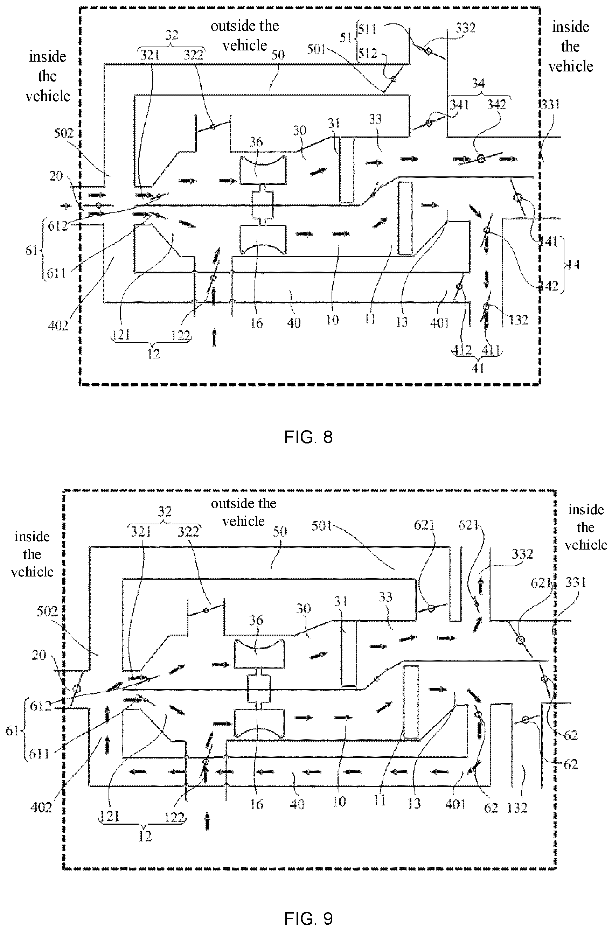

As shown in FIG. 4 and FIG. 8, in an embodiment, the cooling mode is also provided with a second cooling state. The first cooling state can be switched to the second cooling state. When the air conditioning system is in the second cooling state, the circulating air inlet 20, the first air inlet 121, the second air inlet 122, the third air inlet 321, the second air outlet 132, and the third air outlet 331 are all communicated. The fourth air inlet 322, the first air outlet 131, the fourth air outlet 332, the first circulating air duct 40, and the second circulating air duct 50 are all blocked. After the air exchanges heat in the second heat exchange air duct 30 and is discharged into the vehicle, it passes through the circulating air inlet 20. A part of the air enters the third air inlet 321 to continue circulating, while the other part is discharged outside the vehicle after exchanging heat in the first heat exchange air duct 10 through the first air inlet 121. In an embodiment, when the air conditioning system has been working for a period of time, the evaporator 31 and the condenser 11 have entered the normal working state. The circulating air inlet 20, the first air inlet 121, the second air inlet 122, the third air inlet 321, the second air outlet 132, and the third air outlet 331 are adjusted to open. The fourth air inlet 322, the first air outlet 131, and the fourth air outlet 332 are closed, and the first circulating air duct 40 and the second circulating air duct 50 are blocked. The first cooling state is then switched to the second cooling state. After the air cooled by the evaporator 31 flows into the vehicle from the third air outlet 331 to cool the interior, a part of the air flows into the third air inlet 321 from the circulating air inlet 20 again, then flows into the second heat exchange air duct 30, lowering the working temperature of the fresh air. This reduces the air inlet temperature of the second heat exchange air duct 30, minimizes energy waste, and decreases the power required for the evaporator 31 to function. Another part of the air flows into the first air inlet 121 from the circulating air inlet 20, then flows into the first heat exchange air duct 10. The fresh air from the second air inlet 122 then flows into the first heat exchange air duct 10 together, thereby lowering the temperature of the air entering the first heat exchange air duct 10, keeping the condenser 11 in a state of high energy utilization, reducing power loss in the air conditioning system, and finally being discharged out of the vehicle through the second air outlet 132.

In an embodiment, the cooling mode is also provided with a second cooling state. The first cooling state can be switched to the second cooling state. When the air conditioning system is in the second cooling state, the circulating air inlet 20, the second air inlet 122, the third air inlet 321, the second air outlet 132, and the third air outlet 331 are all communicated. The first air inlet 121, the fourth air inlet 322, the first air outlet 131, the fourth air outlet 332, the first circulating air duct 40, and the second circulating air duct 50 are all blocked. The air, after heat exchange through the second heat exchange air duct 30, is discharged into the vehicle. After passing through the circulating air inlet 20, it enters the third air inlet 321 to continue circulating. That is, the first air inlet 121 is blocked. At this time, the fourth air outlet end 502 of the second circulating air duct 50 is only communicated with the third air inlet 321. The air cooled by the evaporator 31 all flows from the third air inlet 321 into the second heat exchange air duct 30 to assist the evaporator 31 in heat exchange.

As shown in FIG. 2 and FIG. 6, in an embodiment, a first control valve 60 for controlling the opening and closing of the third air inlet 321 and the first air inlet 121 is provided between the third air inlet 321 and the first air inlet 121. The first control valve 60 is provided with a first switch position 601, a second switch position 602, and a third switch position 603, which are switchable to each other.

When the first control valve 60 is in the first switch position 601, the first air inlet 121 is open and the third air inlet 321 is closed. In the second switch position 602, the third air inlet 321 is open and the first air inlet 121 is closed. In the third switch position 603, both the third air inlet 321 and the first air inlet 121 are open, and the first control valve 60 controls the air intake ratio of the third air inlet 321 to the first air inlet 121.

In an embodiment, the first control valve 60 controls the mutual switch of the first switch position 601, the second switch position 602, and the third switch position 603. Thus, the opening and closing of the first air inlet 121 and the third air inlet 321 are controlled. Then, the first circulating air duct 40 and the second circulating air duct 50 are controlled to be connected and closed with the first air inlet 121 and/or the third air inlet 321. Thus, the conversion of the air conditioning system in different states and/or different modes is realized. And since the first control valve 60 is an infinite control valve (i.e., the first switch valve 60 can be rotated to any position between the first switch position 601, the second switch position 602, and the third switch position 603), it can also control the air intake ratio of the third air inlet 321 to the first air inlet 121. Thus, the air recovery amount of the second heat exchange air duct 30 and the first heat exchange air duct 10 is controlled, and the temperature of the air in the second heat exchange air duct 30 and the first heat exchange air duct 10 is adjusted. The first control valve 60 achieves this by controlling the diameter of the first air inlet 121 and the diameter of the third air inlet 321 through its deflection angle relative to both. Compared with using multiple control valves to control the opening and closing of the first air inlet 121 and the third air inlet 321, this solution is more convenient to install and operate.

As shown in FIG. 1, FIG. 3 to FIG. 5, and FIG. 7 to FIG. 9, in an embodiment, a first switch valve group 61 is provided between the third air inlet 321 and the first air inlet 121. The first switch valve group 61 includes a first switch valve 611 for controlling the opening and closing of the first air inlet 121, and a second switch valve 612 for controlling the opening and closing of the third air inlet 321. The first switch valve group 61 controls the air intake ratio of the third air inlet 321 to the first air inlet 121. In an embodiment, since both the first switch valve 611 and the second switch valve 612 are infinite control valves, they can control the aperture size of the first air inlet 121 and the second air inlet by adjusting their inclination angles. This allows more precise control of the air intake ratio of the first air inlet 121 to the third air inlet 321 compared to using a single control valve.

As shown in FIG. 9, in an embodiment, the first circulating air duct 40 is provided with a third air inlet end 401 and a third air outlet end 402. The third air inlet end 401 is directly connected to the first heat exchange air duct 10 and is located before the first air outlet 131 and the second air outlet 132. The third air outlet end 402 is communicated with the first air inlet 121 and/or the third air inlet 321. In an embodiment, the third air inlet end 401 of the first circulating air duct 40 is directly connected to the first heat exchange air duct 10 and is located before the first air outlet 131 and the second air outlet 132. That is, the third air inlet end 401 is connected to a section of the duct after the condenser 11 in the first heat exchange air duct 10. If the first air outlet end 13 is directly connected to the first air outlet 131 and the second air outlet 132, then the third air inlet end 401 is connected after the condenser 11 and before the first air outlet 131 and the second air outlet 132. If the first air outlet 13 is indirectly connected to the first air outlet 131 and the second air outlet 132, then the third air inlet end 401 is connected after the condenser 11, but before the ducts connecting the first air outlet 13 to the first air outlet 131 and the second air outlet 132. This allows the air after heat exchange through the first heat exchange air duct 10 to flow directly into the first circulating air duct 40 in the first heating state, shortening the airflow path and further reducing heat loss.

In an embodiment, a first control switch 62 is provided at the first circulating air duct 40, the first air outlet 131, and the second air outlet 132. The three first control switches 62 control the opening and closing of the first circulating air duct 40, the first air outlet 131, and the second air outlet 132, respectively. They also control the air intake volume and air intake rate of the first circulating air duct 40, the first air outlet 131, and the second air outlet 132. When the third air inlet end 401 of the first circulating air duct 40 is directly connected to the first heat exchange air duct 10 and is located before the first air outlet 131 and the second air outlet 132, the first control switch 62 controls the flow direction of the air. The first control switches 62 are infinite control valves, allowing for the adjustment of the air intake volume and speed for the first circulating air duct 40, the first air outlet 131, and the second air outlet 132.

When the third air inlet end 401 of the first circulating air duct 40 is directly connected to the first heat exchange air duct 10 and is located before the first air outlet 131 and the second air outlet 132, in another embodiment, the second circulating air duct 50 is provided with a fourth air inlet end 501 and a fourth air outlet end 502. The fourth air inlet end 501 is directly connected to the second heat exchange air duct 30 and is located before the third air outlet 331 and the fourth air outlet 332. The fourth air outlet end 502 is communicated with the first air inlet 121 and/or the third air inlet 321. In an embodiment, the fourth air inlet end 501 of the second circulating air duct 50 is directly connected to the second heat exchange air duct 30 and is located before the third air outlet 331 and the fourth air outlet 332. That is, the fourth air inlet end 501 is communicated with a section of the duct after the evaporator 31 in the second heat exchange air duct 30. If the second air outlet 33 is directly connected to the third air outlet 331 and the fourth air outlet 332, the fourth air inlet end 501 is connected after the evaporator 31 and before the first air outlet 131 and the second air outlet 132. If the second air outlet 33 is indirectly connected to the third air outlet 331 and the fourth air outlet 332, the fourth air inlet end 501 is connected after the evaporator 31 and before the ducts connecting the second air outlet 33 to the third air outlet 331 and the fourth air outlet 332. This allows the air after heat exchange through the second heat exchange air duct 30 to flow directly into the second circulating air duct 50 in the first cooling state, thereby shortening the airflow path and reducing energy loss.

In an embodiment, a second control switch 621 is provided at the second circulating air duct 50, the third air outlet 331, and the fourth air outlet 332. The three second control switches 621 respectively control the opening and closing of the second circulating air duct 50, the third air outlet 331, and the fourth air outlet 332, as well as the air intake volume and air intake rate of the second circulating air duct 50, the third air outlet 331, and the fourth air outlet 332. When the fourth air inlet end 501 of the second circulating air duct 50 is directly connected to the second heat exchange air duct 30 and located before the third air outlet 331 and the fourth air outlet 332, the second control switch 621 is used to control the air flow direction. The second control switches 621 are infinite control valves, allowing for adjustment of the air intake volume and speed of the second circulating air duct 50, the third air outlet 331, and the fourth air outlet 332.

As shown in FIGS. 1 to 8, in an embodiment, the air conditioning system further includes a first branch channel 133 and a second branch channel 134 communicated with the first air outlet end 13. The first branch channel 133 is communicated with the first air outlet 131, and the second branch channel 134 is communicated with the second air outlet 132. The first circulating air duct 40 is provided with a third air inlet end 401 and a third air outlet end 402. The third air inlet end 401 is communicated with the second branch channel 134, and the third air outlet end 402 is communicated with the first air inlet 121 and/or the third air inlet 321. The duct at the first air outlet end 13 is bifurcated to form the first branch channel 133 and the second branch channel 134. The first air outlet 131 is provided at the first branch channel 133, and the second air outlet 132 is provided at the second branch channel 134. The air after heat exchange through the first heat exchange air duct 10 flows through the first air outlet 13 to the second branch channel 134, then enters the first circulation air duct 40 from the third air inlet 401 for circulation.

In an embodiment, the air conditioning system further includes a third branch channel 333 and a fourth branch channel 334 communicated with the second air outlet end 33. The third branch channel 333 is communicated with the third air outlet 331, and the fourth branch channel 334 is communicated with the fourth air outlet 332. The second circulating air duct 50 is provided with a fourth air inlet end 501 and a fourth air outlet end 502. The fourth air inlet end 501 is communicated with the fourth branch channel 334, and the fourth air outlet end 502 is communicated with the first air inlet 121 and/or the third air inlet 321. The duct at the second air outlet end 33 is bifurcated to form the third branch channel 333 and the fourth branch channel 334. The third air outlet 331 is provided in the third branch channel 333, and the fourth air outlet 332 is located in the fourth branch channel 334. The air after heat exchange through the second heat exchange air duct 30 flows into the fourth branch channel 334 through the second air outlet 33, then enters the second circulation air duct 50 from the fourth air inlet 501 for circulation.

As shown in FIG. 5 to FIG. 8, in an embodiment, a second switch valve group 14 is provided at the first branch channel 133 and the second branch channel 134. The second switch valve group 14 includes a third switch valve 141 provided at the first branch channel 133 and a fourth switch valve 142 provided at the second branch channel 134. The second switch valve group 14 controls the air intake ratio of the first branch channel 133 and the second branch channel 134. The third switch valve 141 controls the first branch channel 133, and the fourth switch valve 142 controls the second branch channel 134. By rotating the inclination angles of the third switch valve 141 and the fourth switch valve 142, the opening sizes of the first branch channel 133 and the second branch channel 134 can be controlled, thereby controlling the air intake ratio between the fourth branch channel 334 and the third branch channel 333. Compared to using a single control valve to simultaneously control the air intake ratio between the third branch channel 333 and the fourth branch channel 334, this solution enables more precise control of the air intake ratio between the third branch channel 333 and the fourth branch channel 334.

In an embodiment, as shown in FIG. 1 to FIG. 4, a second control valve 15 is provided at the connection between the first branch channel 133 and the second branch channel 134. The second control valve 15 is provided with a fourth switch position 151 and a fifth switch position 152, which are mutually switchable. When the second control valve 15 is in the fourth switch position 151, the second branch channel 134 is communicated, and the first branch channel 133 is blocked. When the second control valve 15 is in the fifth switch position 152, the first branch channel 133 is communicated, and the second branch channel 134 is blocked.

In an embodiment, the second control valve 15 controls the communication and blocking of the first branch channel 133 and the second branch channel 134 by switching between the fourth switch position 151 and the fifth switch position 152, thereby controlling the flow direction of the air. Since the second control valve 15 is an infinite control valve, it can rotate to any position between the fourth switch position 151 and the fifth switch position 152, where the two positions represent the extreme states. Therefore, the second control valve 15 can also control the air intake ratio between the first branch channel 133 and the second branch channel 134. In an embodiment, the second control valve 15 can control the opening size of the first branch channel 133 and the second branch channel 134 by its deflection angle relative to the first branch channel 133 and the second branch channel 134, and then control the air intake ratio of the first branch channel 133 and the second branch channel 134. Compared with using multiple control valves to control the communication and blocking of the first branch channel 133 and the second branch channel 134, this solution is more convenient to install and more convenient to operate.

As shown in FIG. 5 to FIG. 8, in an embodiment, a third switch valve group 34 is provided at the third branch channel 333 and the fourth branch channel 334. The third switch valve group 34 includes a fifth switch valve 341 provided at the fourth branch channel 334 and a sixth switch valve 342 provided at the third branch channel 333. The third switch valve group 34 controls the air intake ratio of the third branch channel 333 and the fourth branch channel 334. In an embodiment, the third branch channel 333 is controlled by the sixth switch valve 342, while the fifth switch valve 341 controls the fourth branch channel 334. Thus, the flow direction of the air is controlled. Since the fifth switch valve 341 and the sixth switch valve 342 are both infinite control valves, the opening sizes of the fourth branch channel 334 and the third branch channel 333 are controlled by rotating the inclination angles of the fifth switch valve 341 and the sixth switch valve 342, thereby controlling the air intake ratio of the fourth branch channel 334 to the third branch channel 333. Compared with using one control valve to simultaneously control the air intake ratio of the third branch channel 333 and the fourth branch channel 334, this solution can more accurately control the air intake ratio of the third branch channel 333 and the fourth branch channel 334.

In an embodiment, as shown in FIG. 1 to FIG. 4, a third control valve 35 is provided at the connection between the third branch channel 333 and the fourth branch channel 334. The third control valve 35 is provided with a sixth switch position 351 and a seventh switch position 352, which switch between each other. The third control valve 35 controls the air intake ratio between the third branch channel 333 and the fourth branch channel 334.

When the third control valve 35 is at the seventh switch position 352, the fourth branch channel 334 is communicated, and the third branch channel 333 is blocked. When the third control valve 35 is at the sixth switch position 351, the third branch channel 333 is communicated, and the fourth branch channel 334 is blocked.

In an embodiment, the third control valve 35 controls the mutual switch between the sixth switch position 351 and the seventh switch position 352, thereby controlling the communication and blocking of the third branch channel 333 and the fourth branch channel 334, which in turn controls the flow direction of the air. Since the third control valve 35 is an infinite control valve, it can rotate to any position between the sixth switch position 351 and the seventh switch position 352. In the present solution, the sixth switch position 351 and the seventh switch position 352 are both limit positions of the third control valve 35. Therefore, the third control valve 35 can control the opening sizes of the third branch channel 333 and the fourth branch channel 334 by its deflection angle relative to the third branch channel 333 and the fourth branch channel 334, thereby controlling the air intake ratio between the third branch channel 333 and the fourth branch channel 334. Compared to using multiple control valves to control the communication and blocking of the third branch channel 333 and the fourth branch channel 334, this solution is more convenient to install and operate.

As shown in FIG. 5 to FIG. 8, in an embodiment, a fourth switch valve group 41 is provided at the third air inlet end 401 and the second branch channel 134. The fourth switch valve group 41 includes a seventh switch valve 411 provided at the second branch channel 134 and an eighth switch valve 412 provided at the third air inlet end 401. The fourth switch valve group 41 controls the air intake ratio of the third air inlet end 401 and the second branch channel 134. In an embodiment, the second branch channel 134 is controlled by the seventh switch valve 411, which controls the opening and closing of the second air outlet 132. The eighth switch valve 412 controls the third air inlet end 401, which is communicated with the first circulating air duct 40. This allows the flow direction of the air to be controlled and facilitates the air conditioning system's switch between different modes and/or states. Since the seventh switch valve 411 and the eighth switch valve 412 are both infinite control valves, by rotating the inclination angles of the seventh switch valve 411 and the eighth switch valve 412, the opening sizes of the second branch channel 134 (second air outlet 132) and the third air inlet end 401 (first circulating air duct 40) are controlled. This allows for precise control of the air intake ratio of the second branch channel 134 (second air outlet 132) and the third air inlet end 401 (first circulating air duct 40). Compared to using a single control valve to control the air intake ratio of the second branch channel 134 (second air outlet 132) and the third air inlet end 401 (first circulating air duct 40), this solution allows for more accurate control of the air intake ratio of the second branch channel 134 (second air outlet 132) and the third air inlet end 401 (first circulating air duct 40).

In an embodiment, as shown in FIG. 1 to FIG. 4, a fourth control valve 42 is provided at the connection between the third air inlet end 401 and the second branch channel 134. The fourth control valve 42 is provided with an eighth switch position 421 and a ninth switch position 422, which switch between each other. The fourth control valve 42 controls the air intake ratio between the third air inlet end 401 and the second branch channel 134.

When the fourth control valve 42 is at the eighth switch position 421, the first circulating air duct 40 is communicated, and the second branch channel 134 is blocked. When the fourth control valve 42 is at the ninth switch position 422, the second branch channel 134 is communicated, and the first circulating air duct 40 is blocked.

In an embodiment, the fourth control valve 42 controls the mutual switch between the eighth switch position 421 and the ninth switch position 422, thereby controlling the communication and blocking of the first circulating air duct 40 and the second branch channel 134, which in turn controls the flow direction of the air. Since the fourth control valve 42 is an infinite control valve, it can rotate to any position between the eighth switch position 421 and the ninth switch position 422. In this solution, the eighth switch position 421 and the ninth switch position 422 are both limit positions of the fourth control valve 42. Therefore, the fourth control valve 42 can also control the air intake ratio between the first circulating air duct 40 (third air inlet end 401) and the second branch channel 134 (second air outlet 132). The fourth control valve 42 adjusts the opening sizes of the first circulating air duct 40 (third air inlet end 401) and the second branch channel 134 (second air outlet 132) by its deflection angle relative to the two channels, thus controlling the air intake ratio. Compared to using multiple control valves to control the communication and blocking of the first circulating air duct 40 (third air inlet end 401) and the second branch channel 134 (second air outlet 132), this solution is more convenient to install and operate.

As shown in FIG. 5 to FIG. 8, in an embodiment, a fifth switch valve group 51 is provided at the fourth air inlet end 501 and the fourth branch channel 334. The fifth switch valve group 51 includes a ninth switch valve 511 provided at the fourth branch channel 334 and a tenth switch valve 512 provided at the fourth air inlet end 501. The fifth switch valve group 51 controls the air intake ratio of the fourth air inlet end 501 and the fourth branch channel 334. In an embodiment, the fourth branch channel 334 is controlled by the ninth switch valve 511, which controls the opening and closing of the fourth air outlet 332. The tenth switch valve 512 controls the fourth air inlet end 501, which is communicated with the second circulating air duct 50. This allows for the control of the air flow direction and facilitates the air conditioning system's switch between different modes and/or states. Since the ninth switch valve 511 and the tenth switch valve 512 are both infinite control valves, by rotating their inclination angles, the opening sizes of the fourth branch channel 334 (fourth air outlet 332) and the fourth air inlet end 501 (second circulating air duct 50) are controlled. This allows for precise control of the air intake ratio of the fourth branch channel 334 (fourth air outlet 332) and the fourth air inlet end 501 (second circulating air duct 50). Compared to using a single control valve to control the air intake ratio of the fourth branch channel 334 (fourth air outlet 332) and the fourth air inlet end 501 (second circulating air duct 50), this solution allows for more accurate control.

In an embodiment, as shown in FIG. 1 to FIG. 4, a fifth control valve 52 is provided at the connection between the fourth air inlet end 501 and the fourth branch channel 334. The fifth control valve 52 is provided with a tenth switch position 521 and an eleventh switch position 522, which is switchable to each other. The fifth control valve 52 controls the air intake ratio between the fourth air inlet end 501 and the fourth branch channel 334.

When the fifth control valve 52 is at the tenth switch position 521, the second circulating air duct 50 is connected, and the fourth branch channel 334 is blocked. When the fifth control valve 52 is at the eleventh switch position 522, the fourth branch channel 334 is connected, and the second circulating air duct 50 is blocked.

In an embodiment, the fifth control valve 52 controls the mutual switch between the tenth switch position 521 and the eleventh switch position 522, thereby controlling the communication and blocking of the second circulating air duct 50 and the fourth branch channel 334, which controls the air flow direction. Since the fifth control valve 52 is an infinite control valve, it can be rotated to any position between the tenth switch position 521 and the eleventh switch position 522. In this setup, the tenth switch position 521 and the eleventh switch position 522 represent the limit positions of the fifth control valve 52. Thus, the fifth control valve 52 also controls the air intake ratio between the second circulating air duct 50 (fourth air inlet end 501) and the fourth branch channel 334 (fourth air outlet 332). The fifth control valve 52 can adjust the opening sizes of the second circulating air duct 50 and the fourth branch channel 334 by its deflection angle relative to these channels, thus controlling the air intake ratio. Compared to using multiple control valves to control the communication and blocking of the second circulating air duct 50 (fourth air inlet end 501) and the fourth branch channel 334 (fourth air outlet 332), this solution is more convenient to install and operate.

To further reduce the power loss of the air conditioning system, in an embodiment, the first heat exchange air duct 10 and the second heat exchange air duct 30 are provided adjacent to or at intervals. A first wind wheel 16 is provided in the first heat exchange air duct 10, and a second wind wheel 36 is provided in the second heat exchange air duct 30. The air conditioning system further includes at least one drive motor, which drives the first wind wheel 16 and the second wind wheel 36. In an embodiment, the air conditioning system further includes at least one drive motor, which means that at least one drive motor is provided in the air conditioning system, and two drive motors can also be provided therein.

In an embodiment, a drive motor is provided in the air conditioning system. Since the first heat exchange air duct 10 and the second heat exchange air duct 30 are provided adjacent to or at intervals, the distance between the first heat exchange air duct 10 and the second heat exchange air duct 30 are close, and the air flow directions in the first heat exchange air duct 10 and the second heat exchange air duct 30 are the same. In order to improve the air circulation in the first heat exchange air duct 10 and the second heat exchange air duct 30, a first wind wheel 16 is provided in the first heat exchange air duct 10, and a second wind wheel 36 is provided in the second heat exchange air duct 30. The same drive motor is configured to power the first wind wheel 16 and second wind wheel 36 to work simultaneously, thereby saving the consumption of a drive motor, reducing the installation process, and decreasing the overall power consumption of the air conditioning system.

In an embodiment, two drive motors are provided in the air conditioning system, which are referred to as a first drive motor and a second drive motor. The first drive motor drives the first wind wheel 16 to rotate, and the second drive motor drives the second wind wheel 36 to rotate, that is, the two drive motor drives the first wind wheel 16 and the second wind wheel 36 to rotate, so that the first wind wheel 16 and the second wind wheel 36 can work independently.

The present application further provides a vehicle, including a vehicle body and an air conditioning system. The specific structure of the air conditioning system refers to the embodiment described above. Since the vehicle adopts all the technical solutions of the aforementioned embodiments, it benefits from all the positive effects of those technical solutions, which will not be repeated herein.

The air conditioning system is provided at the vehicle body to adjust the air temperature inside the vehicle.

The above are only some embodiments of the present application, and do not limit the scope of the present application thereto. Under the inventive concept of the present application, equivalent structural transformations made according to the description and drawings of the present application, or direct/indirect application in other related technical fields are included in the scope of the present application.

## Claims

1. An air conditioning system, **characterized by** comprising:
a first heat exchange air duct, wherein a condenser is provided in the first heat exchange air duct, the first heat exchange air duct is provided with a first air inlet end and a first air outlet end, the first air inlet end comprises a first air inlet communicated with a circulating air inlet in a vehicle and a second air inlet communicated with an outside of the vehicle, and the first air outlet end is respectively communicated with a first air outlet communicated with an inside of the vehicle and a second air outlet communicated with an outside of the vehicle;
a second heat exchange air duct, wherein an evaporator is provided in the second heat exchange air duct, the second heat exchange air duct is provided with a second air inlet end and a second air outlet end, the second air inlet end comprises a third air inlet communicated with the circulating air inlet in the vehicle and a fourth air inlet communicated with the outside of the vehicle, and the second air outlet end is respectively communicated with a third air outlet communicated with the inside of the vehicle and a fourth air outlet communicated with the outside of the vehicle; and
a circulation system, comprising:
a first circulating air duct communicated with the first heat exchange air duct, wherein the first circulating air duct is configured to recover air after heat exchange through the first heat exchange air duct and circulate the air to the first air inlet and/or the third air inlet; and/or,
a second circulating air duct communicated with the second heat exchange air duct, wherein the second circulating air duct is configured to recover air after heat exchange through the second heat exchange air duct and circulate the air to the first air inlet and/or the third air inlet.

2. The air conditioning system according to claim 1, wherein:
the air conditioning system is provided with a heating mode comprising a first heating state, and wherein when the air conditioning system is in the first heating state:
the first air inlet, the second air inlet, the third air inlet, the fourth air outlet, and the first circulating air duct are all communicated,
the circulating air inlet, the first air outlet, the second air outlet, the third air outlet, the fourth air inlet, and the second circulating air duct are all blocked; and
air from outside the vehicle is directed into the first heat exchange air duct for heat exchange, flows through the first circulating air duct, and is partly directed into the first air inlet for continued circulation, partly directed into the second heat exchange air duct through the third air inlet for heat exchange and is discharged outside the vehicle; or
the air conditioning system is provided with the heating mode comprising the first heating state, and wherein when the air conditioning system is in the first heating state:
the second air inlet, the third air inlet, the fourth air outlet, and the first circulating air duct are all communicated,
the circulating air inlet, the first air inlet, the first air outlet, the second air outlet, the third air outlet, the fourth air inlet, and the second circulating air duct are all blocked; and
air from outside the vehicle is directed into the first heat exchange air duct for heat exchange, flows through the first circulating air duct, and is directed into the third air inlet, flows into the second heat exchange air duct for heat exchange, and is discharged outside the vehicle.

3. The air conditioning system according to claim 2, wherein the heating mode further comprises a second heating state, the first heating state is switchable to the second heating state, and when the air conditioning system is in the second heating state:
the circulating air inlet, the first air inlet, the second air inlet, the fourth air inlet, the first air outlet, and the fourth air outlet are all communicated,
the third air inlet, the second air outlet, the third air outlet, the first circulating air duct, and the second circulating air duct are all blocked; and
air after heat exchange through the first heat exchange air duct is discharged into the vehicle and recirculates into the first heat exchange air duct together with air from inside the vehicle.

4. The air conditioning system according to claim 1, wherein the air conditioning system is provided with a cooling mode, the cooling mode comprises a first cooling state, wherein in the first cooling state:
the first air inlet, the fourth air inlet, the second air outlet, and the second circulating air duct are all communicated,
the circulating air inlet, the second air inlet, the third air inlet, the first air outlet, the third air outlet, the fourth air outlet, and the first circulating air duct are all blocked; and
air from outside the vehicle is directed into the second heat exchange air duct for heat exchange, flows from the second circulating air duct into the first heat exchange air duct for heat exchange, and is discharged outside the vehicle.

5. The air conditioning system according to claim 4, wherein the cooling mode further comprises a second cooling state, the first cooling state is switchable to the second cooling state, and when the air conditioning system is in the second cooling state:
the circulating air inlet, the first air inlet, the second air inlet, the third air inlet, the second air outlet, and the third air outlet are all communicated,
the fourth air inlet, the first air outlet, the fourth air outlet, the first circulating air duct, and the second circulating air duct are all blocked; and
air after heat exchange through the second heat exchange air duct is discharged into the vehicle, flows through the circulating air inlet, is partly directed into the third air inlet for continued circulation, partly flows through the first air inlet for heat exchange in the first heat exchange air duct and is discharged outside the vehicle; or
the cooling mode further comprises a second cooling state, the first cooling state is switchable to the second cooling state, and when the air conditioning system is in the second cooling state:
the circulating air inlet, the second air inlet, the third air inlet, the second air outlet, and the third air outlet are all communicated,
the first air inlet, the fourth air inlet, the first air outlet, the fourth air outlet, the first circulating air duct, and the second circulating air duct are all blocked; and
air after heat exchange through the second heat exchange air duct is discharged into the vehicle, flows through the circulating air inlet, and is directed into the third air inlet for continued circulation.

6. The air conditioning system according to claim 1, wherein a first control valve is provided between the third air inlet and the first air inlet, and is configured to control an opening and closing of the third air inlet, wherein the first control valve is provided with a first switch position, a second switch position, and a third switch position, switchable between each other;
when the first control valve is at the first switch position, the first air inlet is open and the third air inlet is closed;
when the first control valve is at the second switch position, the third air inlet is open and the first air inlet is closed; and
when the first control valve is at the third switch position, both the third air inlet and the first air inlet are open, and the first control valve is configured to control an air intake ratio between the third air inlet and the first air inlet.

7. The air conditioning system according to claim 1, wherein the first circulating air duct is provided with a third air inlet end and a third air outlet end, the third air inlet end is directly connected to the first heat exchange air duct and located before the first air outlet and the second air outlet, and the third air outlet end is communicated with the first air inlet and/or the third air inlet; and/or
the second circulating air duct is provided with a fourth air inlet and a fourth air outlet, the fourth air inlet is directly connected to the second heat exchange air duct and located before the third air outlet or the fourth air outlet, and the fourth air outlet is communicated with the first air inlet and/or the third air inlet.

8. The air conditioning system according to claim 7, wherein:
the first circulating air duct, the first air outlet, and the second air outlet are all provided with first control switches, wherein each of the first control switches is respectively configured to control an opening and closing state, air intake volume and speed of the first circulating air duct, the first air outlet, and the second air outlet; and/or
the second circulating air duct, the third air outlet, and the fourth air outlet are all provided with second control switches, wherein each of the second control switches is respectively configured to control an opening and closing state, air intake volume and speed of the second circulating air duct, the third air outlet, and the fourth air outlet.

9. The air conditioning system according to claim 1, further comprising:
a first branch channel and a second branch channel communicated with the first air outlet end,
wherein the first branch channel is communicated with the first air outlet and the second branch channel is communicated with the second air outlet; the first circulating air duct is provided with a third air inlet end and a third air outlet end, the third air inlet end is communicated with the second branch channel, and the third air outlet end is communicated with the first air inlet and/or the third air inlet; and/or
a third branch channel and a fourth branch channel communicated with the second air outlet end,
wherein the third branch channel is communicated with the third air outlet and the fourth branch channel is communicated with the fourth air outlet, and the second circulating air duct is provided with a fourth air inlet end and a fourth air outlet end, the fourth air inlet end is communicated with the fourth branch channel, and the fourth air outlet end is communicated with the first air inlet and/or the third air inlet.

10. The air conditioning system according to claim 8, wherein a second switch valve group is provided at a first branch channel and a second branch channel, the second switch valve group comprises a third switch valve provided at the first branch channel and a fourth switch valve provided at the second branch channel, and the second switch valve group is configured to control an air intake ratio between the first branch channel and the second branch channel; or
a second control valve is provided at a connection between the first branch channel and the second branch channel, the second control valve is provided with a fourth switch position and a fifth switch position switchable between each other, and the second control valve is configured to control the air intake ratio between the first branch channel and the second branch channel; and
wherein when the second control valve is in the fourth switch position, the second branch channel is communicated and the first branch channel is blocked, and when the second control valve is in the fifth switch position, the first branch channel is communicated and the second branch channel is blocked.

11. The air conditioning system according to claim 8, wherein a third switch valve group is provided at a third branch channel and a fourth branch channel, wherein the third switch valve group comprises a fifth switch valve provided at the fourth branch channel and a sixth switch valve provided at the third branch channel, and the third switch valve group is configured to control an air intake ratio between the third branch channel and the fourth branch channel; or
wherein a third control valve is provided at a connection between the third branch channel and the fourth branch channel, the third control valve is provided with a sixth switch position and a seventh switch position switchable between each other, and the third control valve is configured to control the air intake ratio between the third branch channel and the fourth branch channel; and
wherein when the third control valve is in the seventh switch position, the fourth branch channel is communicated and the third branch channel is blocked, and when the third control valve is in the sixth switch position, the third branch channel is communicated and the fourth branch channel is blocked.

12. The air conditioning system according to claim 8, wherein:
a fourth switch valve group is provided at the third air inlet and a second branch channel, wherein the fourth switch valve group comprises a seventh switch valve provided at the second branch channel and an eighth switch valve provided at the third air inlet, and the fourth switch valve group is configured to control an air intake ratio between the third air inlet and the second branch channel; or
a fourth control valve is provided at a connection between the third air inlet and the second branch channels, the fourth control valve is provided with an eighth switch position and a ninth switch position switchable between each other, and the fourth control valve is configured to control the air intake ratio between the third air inlet and the second branch channel; and
wherein when the fourth control valve is in the eighth switch position, the first circulating air duct is communicated and the second branch channel is blocked, and when the fourth control valve is in the ninth switch position, the second branch channel is communicated and the first circulating air duct is blocked.

13. The air conditioning system according to claim 8, wherein:
a fifth switch valve group is provided at a fourth air inlet end and the fourth branch channel, wherein the fifth switch valve group comprises a ninth switch valve provided at the fourth branch channel and a tenth switch valve provided at the fourth air inlet end, and the fifth switch valve group is configured to control an air intake ratio between the fourth air inlet and the fourth branch channel; or
a fifth control valve is provided at a connection between the fourth air inlet end and the fourth branch channel, the fifth control valve is provided with a tenth switch position and an eleventh switch position switchable between each other, and the fifth control valve is configured to control the air intake ratio between the fourth air inlet and the fourth branch channel; and
wherein when the fifth control valve is in the tenth switch position, the second circulating air duct is communicated and the fourth branch channel is blocked, and when the fifth control valve is in the eleventh switch position, the fourth branch channel is communicated and the second circulating air duct is blocked.

14. The air conditioning system according to any one of claims 1 to 13, wherein the first heat exchange air duct and the second heat exchange air duct are provided adjacent to or spaced apart from each other, a first wind wheel is provided in the first heat exchange air duct, and a second wind wheel is provided in the second heat exchange air duct, and the air conditioning system further comprises at least one drive motor, wherein the drive motor drives the first wind wheel and the second wind wheel.

15. A vehicle, **characterized by** comprising: a vehicle body and the air conditioning system according to any one of claims 1 to 14, wherein the air conditioning system is provided at the vehicle body.
